# FASCICULE DE BREVET EUROPEEN

(11) **EP 0 511 919 B1**
(45) Date de publication et mention de la délivrance du brevet: **26.11.1997**
(21) Numéro de dépôt: 92420139.5
(22) Date de dépôt: 27.04.1992
(51) Int. Cl.: B01D 53/72, B01D 53/88, B01J 27/22

(54) **Système catalytique, notamment pour la combustion de gaz d'échappement et procédé pour le fabriquer**
Katalysatorvorrichtung zur Verbrennung von Abgasen und Verfahren zu seiner Herstellung
Catalytic system for combusting exhaust gases and process for the fabrication of same

(30) Priorité: 29.04.1991 FR 9105771
(43) Date de publication de la demande: 04.11.1992
(73) Titulaire: PECHINEY RECHERCHE (Groupement d'Intérêt Economique régi par l'Ordonnance du 23 Septembre 1967), 92400 Courbevoie (FR)
(72) Inventeur: Dubots, Dominique, F-74190 Passy (FR)
(74) Mandataire: Mougeot, Jean-Claude

(56) Documents cités:
- EP-A- 0 396 475
- US-A- 4 325 842

## Description

### 1°) DOMAINE TECHNIQUE.

L'invention concerne des systèmes catalytiques constitués de deux composants:
- un support poreux, en général sans activité catalytique propre;
- une couche de carbure,déposée sur les parois des porosités du support et possédant une activité catalytique de surface et une surface spécifique élevée.

Ces systèmes se présentent sous la forme :
- ou de pièces monolithiques de structures variées, alvéolaire, en nid d'abeilles...,
- ou de produits extrudés de taille variée,
- ou de morceaux, granulés, poudres.

L'interêt de tels systèmes réside dans le fait que le produit catalytiquement actif ne présente pas forcément les propriétés mécaniques (solidité, résistance à l'attrition...) ou physiques (stabilité thermique, tenue aux chocs thermiques, conductibilité thermique...) requises dans les conditions de son utilisation. Il est donc utile que ces propriétés soient présentées par le support et que la fonction catalytique soit remplie par le dépôt. En outre, le produit catalytique pouvant être lourd ou coûteux et n'étant actif que par sa surface, il est souvent avantageux d'en limiter ainsi la quantité utilisée.

Ce système peut s'appliquer à tout type de catalyse. Pour la postcombustion catalytique des gaz d'échappement de moteurs d'automobiles, par exemple, le système catalytique se présentera comme une pièce monolithique, de structure alvéolaire ou en nid d'abeilles dont le support aura de bonnes caractéristiques mécaniques et thermiques. Pour d'autres applications, telles, par exemple, la catalyse en lit fluidisé, le système catalytique se présentera sous forme d'une poudre.

### 2°) ETAT DE LA TECHNIQUE.

Les systèmes catalytiques destinés au traitement des gaz d'échappement des moteurs thermiques des véhicules ont comme but de compléter la combustion des hydrocarbures constituant les carburants en gaz carbonique et eau et de transformer les oxydes d'azote en l'oxyde le plus oxydé : NO₂.
Ils sont constitués, en général, d'un support mécanique de faible surface spécifique, le plus souvent en alumine, en silice ou en cordiérite. Sur ce support mécanique, on dépose une couche d' oxyde à haute surface spécifique, de l'alumine par exemple. Sur cette dernière couche enfin, on disperse la phase catalytiquement active, constituée de sels de métaux nobles tels le platine ou le rhodium qui sont ensuite réduits à l'état métallique.

Ces catalyseurs, bien que donnant de bons résultats quant à l'épuration des gaz de combustion des moteurs, présentent cependant certains inconvénients:
- les sels de platine et de rhodium ont un coût très élevé qui se répercute sur le prix des catalyseurs;
- la couche d'alumine ou plus généralement d'oxyde à haute surface spécifique est fragile et peut perdre une partie de cette surface spécifique par élévation intempestive de température au cours de la réaction catalytique, favorisée par la médiocre conductibilité thermique du support;
- l'oxyde à grande surface spécifique présente en général une distribution porosimétrique dont les dimensions de pores sont inférieures à 1 micromètre (10000 angströms ou 1000 nanomètres) et quasiment pas de macroporosité supérieure à 1 micromètre. Cela a pour conséquence que, pour faciliter l'accès des espèces chimiques objets de l'opération catalytique aux sites catalytiques, il est nécessaire d'utiliser un support dont la porosité supérieure au micromètre résoud ce problème de transfert;
- la récupération des métaux nobles est rendue malaisée par la présence d'alumine réactive susceptible de former des composés définis ou des solutions solides avec ces métaux;
- enfin le procédé de préparation, en trois étapes, contribue au coût élevé de l'ensemble.

Dans le domaine plus général de la fabrication de catalyseurs, on connaît le brevet US 4 536 358 qui utilise pour obtenir un produit poreux en carbure métallique ou métalloïdique de surface et de structure poreuse appropriées, un support en oxyde minéral (de l'alumine par exemple) présentant ces caractéristiques de surface et de structure poreuse. On dépose sur ce support minéral un produit organique polymérisable qui est ensuite pyrolysé et forme une couche de composé carboné. Sur cette couche, on dépose enfin, par des techniques de dépôt en phase vapeur, le métal ou métalloïde dont on veut obtenir le carbure. On chauffe à haute température et on obtient ainsi une réplique en carbure de la surface de l'oxyde support, oxyde que l'on peut éliminer ensuite, par dissolution par exemple.
Il convient de noter que, dans ce procédé, les propriétés de surface et de structure poreuse sont conférées par le support et non par les conditions particulières d'obtention du carbure.

### 3°) OBJET DE L'INVENTION

L'invention a pour objet un procédé consistant à développer, sur un support poreux à bonnes propriétés mécaniques et physiques, mais à surface spécifique médiocre, un revêtement catalytiquement actif à base de carbures métalliques à grande surface.

L'invention comprend aussi, de façon préférentielle, l'étape préliminaire de fabrication d'un support poreux particulier en carbure de silicium.

Le procédé préliminaire de fabrication du support,comme le procédé principal de fabrication du revêtement catalytiquement actif font généralement appel au même principe:
- mélange d'un composé métallique avec une résine organique;
- carbonisation de la résine;
- réduction et carburation du composé métallique.

Les espèces métalliques peuvent être introduites sous forme de composés métalliques selon d'autres variantes de procédé que l'étape d'introduction dans la résine, comme cela sera vu plus loin.

Le procédé est un procédé de préparation d'un système catalytique composé d'un support poreux et d'une couche de carbures métalliques dont la surface spécifique permet une activité catalytique caractérisé par l'une ou l'autre des combinaisons d'étapes objet des revendications 1 à 3 correspondant à trois mises en oeuvre différentes du même concept inventif.

L'invention a également pour objet les systèmes catalytiques composés d'un support et d'un dépôt de carbures métalliques à grande surface spécifique, fabriqués selon le procédé.

### 4°) DESCRIPTION DE L'INVENTION.

Ainsi qu'il a été indiqué dans l'objet de l'invention,le procédé comprend une étape préliminaire, l'obtention du support, et une étape principale, la fabrication du revêtement catalytique, chacune de ces étapes étant elle-même constituée de phases successives.

### 4.1 Première étape: Obtention du support.

Cette première étape peut consister simplement à choisir un support convenable, compte tenu des propriétés mécaniques ou physiques qu' exigent les conditions de fonctionnement du système catalytique. On choisira par exemple des supports classiques à base de silice, d'alumine, de cordiérite (silicate d'aluminium et de magnésium) ou des supports récemment développés à base de nitrure de silicium ou de composés de nitrure de silicium et alumine (Sialons). Il convient de rappeler que ces supports peuvent se présenter sous forme de pièces monolithiques, d'extrudés, de poudres...

Cette première étape peut consister aussi à préparer un support en carbure de silicium. Elle comprend alors les phases suivantes:
a) Fabrication d'un mélange de silicium en poudre et d'agents susceptibles d'apporter du carbone pour la carburation ultérieure du silicium et de donner au mélange une plasticité suffisante pour permettre sa mise en forme dans de bonnes conditions, par exemple par extrusion.
   Les agents d'apport de carbone sont de deux natures:
   - un liquide organique polymérisable par chauffage ou catalyse et qui par sa viscosité contribuera à la plasticité du mélange obtenu. On utilisera de préférence des résines de types furfurylique ou phénolique.
   - de la poudre de carbone de type noir de fumée (Carbon black) et/ou des fines de charbon actif.

   Les proportions de ces trois composants, silicium, résine, poudre de carbone, sont déterminées pour satisfaire aux contraintes suivantes:
   - assurer le rapport stoechiométrique Si-C nécessaire à la formation du carbure de silicium: 12 g au minimum de carbone pour 28 g de silicium. Or le carbone a deux sources: la poudre de carbon black et/ou de charbon actif et la carbonisation du liquide organique ou plutôt du polymère qui en résulte. Chaque résine organique est caractérisée par un rendement ou taux de carbone à la carbonisation. Une même quantité de carbone après carbonisation peut donc être atteinte par différents rapports entre les quantités de carbone solide (carbon black et/ou charbon actif) et de résine. Cette indétermination est levée par la deuxième contrainte.
   - permettre l'obtention d'un mélange de plasticité convenable pour la mise en forme du mélange et l'obtention d'un produit, extrudé par exemple, assez solide à vert, c'est-à-dire avant cuisson, pour pouvoir être manipulé sans dommage, avec certaines précautions. Cette plasticité convenable dépend évidemment de la viscosité de la résine choisie, mais aussi des proportions de liquide (résine) et de solide (carbon black et silicium en poudre).
b) Mise en forme du mélange par exemple par extrusion à la presse selon une technique connue pour obtenir soit une pièce monolithique de forme appropriée à son utilisation comme support de catalyseur de pot d'échappement, par exemple sous forme de nid d'abeille, soit des extrudés, des morceaux ou des poudres, suivie d'une polymérisation de la résine.
c) Carbonisation du mélange mis en forme, monolithe, extrudés ou poudres. Cette carbonisation a pour objet de pyrolyser la résine contenue dans le mélange mis en forme pour la transformer en carbone. Elle se fait en atmosphère non-oxydante, à une température comprise entre 600°C et 1000°C, pendant une durée suffisante pour carboniser la totalité de la résine, en général de 1 à 4 heures. Dans le cas de blocs, ils peuvent être concassés, broyés et tamisés pour obtenir des granulés et des poudres calibrés.
d) Carburation du silicium. Cette opération a pour objet de transformer le produit carbonisé, obtenu dans le stade précédent et composé d'un mélange de silicium et de carbone en carbure de silicium. Elle se fait en atmosphère non-oxydante, mais qui peut être nitrurante, à une température comprise entre 1350 et 1450°C, température voisine de celle de fusion du silicium, pendant une durée de 1 à 2 heures.
   Le support ainsi obtenu est constitué ou d'une pièce monolithique, de structure par exemple en nid d'abeille ou d'extrudés, granulés ou poudres en carbure de silicium poreux.
   Ce support présente une bonne résistance mécanique, une excellente tenue aux chocs thermiques, une grande inertie chimique et une bonne conductibilité thermique. En revanche, sa surface spécifique est relativement médiocre: de l'ordre de 0,5 à 4 m²/gramme. Des essais systématiques ont, en effet, montré que lorsque la température de carburation croît, le rendement de conversion en SiC croît de même que les propriétés mécaniques, mais que la surface spécifique du carbure de silicium décroît. Dans le procédé objet de l'invention, on privilégie l'obtention de caractéristiques mécaniques et thermiques élevées en choisissant une température de carburation élevée, voisine de celle de fusion du silicium.

### 4.2 Fabrication de la surface catalytique.

Cette deuxième étape est constituée des phases suivantes:
e) Engobage du support poreux choisi ou fabriqué au cours de la première étape par immersion dans une suspension d'oxydes métalliques réductibles broyés finement et dont la surface spécifique BET est de l'ordre de 5 à 20 m²/g dans un produit organique de viscosité ajustée. Au lieu d'une suspension d'oxydes, on peut utiliser une suspension ou solution de composés métalliques réductibles. L'engobage est une opération usuelle dans les techniques céramiques, consistant à recouvrir une pièce céramique d'un produit minéral ou organique par immersion dans une solution ou suspension plus ou moins visqueuse, la quantité de produit retenu en surface étant évidemment fonction de la viscosité et de la tension superficielle de cette solution ou suspension. Dans le cas présent, on utilise comme suspension d'engobage une suspension de l'oxyde ou du mélange d'oxydes du métal ou des métaux dont on veut obtenir un dépôt de carbure en surface. Le choix de ce ou ces oxyde(s) métalliques est guidé par différentes considérations:
   Le carbure et les oxycarbures formés dans le stade ultérieur doivent présenter une activité catalytique spécifique par exemple d'oxydation des gaz de combustion des moteurs.
   L'oxyde doit être facilement réductible par le carbone et carburable à des températures relativement modérées.
   Répondent à ces conditions l'oxyde de molybdène MoO₃, l'oxyde de tungstène WO₃, l'oxyde de vanadium V₂O₅, mais également les oxydes de tantale,de niobium de chrome et de fer, cette liste n'étant pas limitative.
   Le milieu organique dans lequel l'oxyde est mis en suspension sera une solution d'un produit polymérisable, d'une résine organique, d'un brai ou d'un goudron. On choisira de préférence une résine thermodurcissable à taux de carbone résiduel après carbonisation élevé et susceptible de développer par pyrolyse une structure poreuse à haute surface spécifique. Là encore les résines furfuryliques et phénoliques s'avèrent particulièrement adaptées.
   L'engobage qui vient d'être décrit, suivi d'un séchage ou d'un étuvage éventuel pour éliminer les solvants et polymériser la résine permet de déposer, sur les parois du support de SiC, une couche d'oxyde pulvérulent dispersé dans un polymère organique.
f) Carbonisation du polymère organique déposé sur le support en carbure de silicium.Elle se fait comme précédemment en atmosphère non-oxydante, à une température comprise entre 300°C et 1000°C, pendant une durée suffisante pour carboniser la totalité de la résine, en général de 1 à 4 heures. On obtient alors, déposée sur le support en SiC, une dispersion d'oxydes métalliques dans une matrice carbonée à haute surface spécifique.
g) Réduction de l'oxyde et carburation du métal. Cette dernière opération consiste à porter le produit obtenu au stade précédent à une température comprise entre 700°C et 1400°C sous atmosphère non-oxydante pendant une durée de 30 minutes à 4 heures de sorte qu'il se forme sur le squelette de SiC une couche de carbure métallique à haute surface spécifique présentant une activité catalytique. Cette activité catalytique est liée à une réduction imparfaite des oxydes métalliques se traduisant par la présence, en surface, d'oxycarbures métalliques amorphes. Des traitements postérieurs, consistant en des oxydations ménagées à basse température, de 300°C à 700°C suivant les carbures, peuvent favoriser la formation de ces phases amorphes d'oxycarbures.

### 4.3 Variantes possibles.

Un certain nombre de variantes peuvent être apportées à l'étape 4.2 ci-dessus sans sortir du cadre de cette invention:
h) Pour certains métaux facilement carburables et dont les oxydes sont facilement réductibles, tels le molybdène et le vanadium, les phases f) et g) prévues ci-dessus peuvent être confondues en un seul traitement à plus basse température, entre 900° et 950°C au cours duquel on fait progressivement la carbonisation du constituant organique, la réduction de l'oxyde et la carburation du métal.
   Pour le fer, les phases f) et g) peuvent être également confondues en un seul traitement, qui, en atmosphère non oxydante mais neutre doit avoir lieu au voisinage de 1200°C pour réaliser un dépôt de fer métallique contenant des traces de carbure de fer. En outre, l'utilisation d'une atmosphère carburante, constituée d'un hydrocarbure tel le propane par exemple, permet d'abaisser la température du traitement au voisinage de 950°C et permet l'obtention d'un dépôt composé presque totalement de carbure de fer.
i) L'engobage décrit en e) ci-dessus peut être remplacé par les traitements d'imprégnation décrits ci-après et qui en diffèrent légèrement:
   - Double imprégnation (1er type). Le support est d'abord imprégné d'une solution aqueuse ou organique d'un sel métallique décomposable, réductible et carburable. Le support ayant subi cette première imprégnation est étuvé, puis imprégné une deuxième fois par une solution d'un composé organique réducteur et carburant de type résine organique ou produit polymérisable à viscosité ajustée. On procède ensuite aux traitements de polymérisation, de carbonisation, de réduction et de carburation.
   - Double imprégnation (2eme type). Le support est d'abord imprégné d'une solution d'un composé organique réducteur et carburant de type résine organique ou produit polymérisable à viscosité ajustée. La résine imprégnant le support est polymérisée puis carbonisée de façon à créer sur la surface des pores du support une couche carbonée à surface spécifique élevée. Le support muni de sa couche carbonée est imprégné une deuxième fois par une solution aqueuse ou organique d'un sel métallique décomposable, réductible et carburable, puis étuvé. On procède ensuite aux traitements de réduction et de carburation.
   - Simple imprégnation.Le support est imprégné non pas avec une suspension d'oxyde métallique dans un liquide organique contenant une résine dissoute, mais avec une solution d'un sel métallique dans ce liquide organique.

   Pour toutes ces variantes, les sels métalliques utilisés sont ceux des métaux indiqués en 4.2 e), de même que les solutions de composés organiques.

### 4.4 Produit obtenu.

Le produit obtenu est un système catalytique présentant la texture et/ou la forme souhaitées en vue d'améliorer le contact entre le catalyseur et les gaz: structure monolithique alvéolaire, en nid d'abeille, extrudés, granulés de forme et de taille variées, poudres, constitué:
- d'un support à bonnes caractéristiques mécaniques, à excellente tenue aux chocs thermiques, à grande inertie chimique, à bonne conductivité thermique, à surface spécifique relativement faible,
- d'un revêtement de carbures et d'oxycarbures à haute surface spécifique de métaux appartenant au groupe: molybdène, tungstène, vanadium, tantale, niobium, chrome et fer.

### 5°) EXEMPLES.

### Exemple 1.

Système catalytique Mo₂C sur support nitrure de siliciumalumine.
Le support est constitué de grains de sialon commercialisés par Pechiney Electrométallurgie sous la marque NITRAL. Leur granulométrie est comprise entre 1 et 3,15 mm, leur surface BET est de 0,62 m2/g, leur porosité mesurée au porosimètre à mercure, de 300 mm3/g, avec un diamètre des pores compris entre 0,5 et 50 micromètres.

La suspension d'imprégnation est un mélange de:
500 g de résine furfurylique LP 340 de quaker Oats Chemicals
500 g d'éthanol
100 g d'oxyde de molybdène MoO₃ en poudre

Imprégnation. 100 g de grains de sialon sont versés dans la suspension et l'ensemble est agité pendant quelques minutes, puis versé sur un tamis d'ouverture de maille 1 mm de manière à séparer les grains de la suspension et les égoutter. Les grains imprégnés égouttés sont alors séchés sous agitation de manière à polymériser la résine tout en évitant le collage.

Traitement thermique. Les grains imprégnés séchés sont placés dans un four sous balayage d'azote, puis chauffés jusqu'à 1000°C et maintenus 2 heures à cette température. Pendant la montée en température et le palier, on opère à la fois la carbonisation de la résine, la réduction de l'oxyde de molybdène qui s'achève par la carburation quasi totale pour former une couche de Mo₂C sur les parois des pores du support.
Le système catalytique obtenu possède une surface spécifique de 33 m2/g, bien supérieure à celle du support.

### Exemple 2.

Il ne diffère du précédent que par la nature du support constitué cette fois de nitrure de silicium (Si₃N₄) commercialisé par Pechiney Electrométallurgie sous la marque NITROSIL 10.

Ces grains ont une surface BET et une distribution de pores analogues à celle du support de l'exemple 1.

Après imprégnation et traitement thermique,le système catalytique granulaire possède une surface spécifique BET de 45 m2/g.

### Exemple 3.

Système catalytique Mo₂C sur support carbure de silicium poreux.
Le support est constitué de produits extrudés en carbure de silicium, fabriqués ainsi:

On prépare un pâte de composition suivante:
3100 g de résine furfurylique LP 340 de Quaker Oats Chemicals
2000 g d'éthanol
4500 g de silicium en poudre
2300 g de carbon black
Après malaxage pour obtenir une pâte homogène, cette pâte est extrudée à la presse sous forme de petits bâtonnets de 2 mm de diamètre et de 5 mm de longueur environ.
Ces bâtonnets, après évaporation du solvant et polymérisation de la résine, sont portés sous atmosphère d'azote à une température de 800°C pendant 2 heures, afin de carboniser totalement la résine. Ils sont ensuite portés, toujours sous atmosphère d'azote, à une température de 1400°C pendant 2 heures, afin de carburer le silicium. On obtient ainsi un support poreux en carbure de silicium dont la surface spécifique BET n'est que de 0,5 m2/g.

La suspension d'imprégnation est un mélange de:
500 g de résine furfurylique LP 340 de Quaker Oats Chemicals
500 g d'éthanol
100 g d'oxyde de molybdène MoO₃ en poudre

Imprégnation. Les bâtonnets de carbure de silicium sont versés dans la suspension et l'ensemble est agité pendant quelques minutes, puis versé sur une grille 1 mm de manière à les séparer de la suspension et à les égoutter. Les bâtonnets imprégnés et égouttés sont alors séchés sous agitation de manière à polymériser la résine tout en évitant le collage.

Traitement thermique. Les bâtonnets imprégnés séchés sont placés dans un four sous balayage d'azote, puis chauffés jusqu'à 1000°C et maintenus 2 heures à cette température. Pendant la montée en température et le palier, on opère à la fois la carbonisation de la résine, la réduction de l'oxyde de molybdène qui s'achève par la carburation quasi totale pour former une couche de Mo₂C sur les parois des pores du support.
Le système catalytique obtenu possède une surface spécifique de 25 m2/g, bien supérieure à celle du support.

### Exemple 4

Il ne diffère de l'exemple 1 que par une viscosité supérieure de la suspension obtenue en réduisant de moitié la quantité de solvant, l'éthanol. La surface spécifique BET du système catalytique passe à 54 m2/g.

### Exemple 5

Système fer carburé sur support Sialon.

Le support est constitué de grains de sialon commercialisés par Pechiney Electrométallurgie sous la marque NITRAL. Leur granulométrie est comprise entre 1 et 3,15 mm, leur surface BET est de 0,62 m2/g, leur porosité mesurée au porosimètre à mercure, de 300 mm3/g, avec un diamètre des pores compris entre 0,5 et 50 micromètres.

La suspension d'imprégnation est un mélange de:
500 g de résine furfurylique LP 340 de Quaker Oats Chemicals
500 g d'éthanol
100 g d'oxyde de fer Fe₂O₃ (hématite) en poudre

Imprégnation. 100 g de grains de sialon sont versés dans la suspension et l'ensemble est agité pendant quelques minutes, puis versé sur un tamis d'ouverture de maille 1 mm de manière à séparer les grains de la suspension et les égoutter. Les grains imprégnés égouttés sont alors séchés sous agitation de manière à polymériser la résine tout en évitant le collage.

Traitement thermique. Les grains imprégnés séchés sont placés dans un four sous balayage d'azote, puis chauffés jusqu'à 1200°C et maintenus 2 heures à cette température. Pendant la montée en température et le palier, on opère à la fois la carbonisation de la résine, la réduction de l'oxyde de fer qui s'achève par une carburation partielle pour former une couche de fer légèrement carburé sur les parois des pores du support.

Le système catalytique obtenu possède une surface spécifique de 35 m2/g, bien supérieure à celle du support.

### Exemple 6

Système carbure de fer sur support carbure de silicium.

Le support est constitué de grains de carbure de silicium obtenus par broyage de bâtonnets fabriqués comme indiqué l'exemple 3.

La suspension d'imprégnation est un mélange de:
200 g de résine furfurylique LP 340 de Quaker Oats Chemicals
200 g de carbon black Printex 85 de Degussa
600 g d'oxyde de fer Fe₂O₃ (hématite) en poudre auquel on ajoute du méthanol afin d'obtenir une suspension suffisamment fluide.

Imprégnation. Les grains de carbure de silicium sont versés dans la suspension et l'ensemble est agité pendant quelques minutes, puis versé sur une grille de manière à séparer les grains de la suspension et les égoutter. Les grains imprégnés égouttés sont alors séchés sous agitation de manière à polymériser la résine tout en évitant le collage.

Traitement thermique. Les grains imprégnés séchés sont traités en continu dans un four rotatif réglé à 950°C sous balayage à co-courant par du propane. A l'issue du traitement, il s'est formé en surface des pores du support une couche de carbure de fer à haute surface spécifique.

Le système catalytique obtenu possède une surface spécifique BET de 24 m2/g, bien supérieure à celle du support. Il présente en même temps:
- les qualités catalytiques du dépôt à haute surface spécifique qui recouvre les parois des porosités;
- les propriétés mécaniques (solidité, dureté) et physiques (conductibilité thermique) du support de carbure de silicium. En particulier, sa résistance à l'écrasement, caractérisée par la mesure BCS (Bulk Crushing Strength) est largement supérieure à 1.

### Exemple 7

Système carbure de tungstène sur support nitrure de silicium. Imprégnation en deux temps.

Des grains de nitrure de silicium (Si₃N₄) commercialisé par Pechiney Electrométallurgie sous la marque NITROSIL 10 de dimensions comprises entre 1 et 3,15 mm sont imprégnés de sels de tungstène par immersion dans une solution aqueuse chaude saturée d'acide métatungstique (H₂W₄O₁₃,9H₂O). Ces grains sont égouttés, séchés dans une étuve ventilée, puis plongés dans une solution de résine furfurylique dans de l'alcool à 50 % en poids.

Après séchage à l'étuve, un traitement analogue à celui de l'exemple 1 est effectué. Le système catalytique présente une surface spécifique BET égale à 41 m2/g.

### Exemple 8

Système carbure de vanadium sur support carbure de silicium. Imprégnation en deux temps.

Des grains de carbure de silicium fabriqués comme dans l'exemple 6 sont plongés dans une solution alcoolique saturée d'acide tétravanadique (H₂V₄O₁₁). Ces grains sont égouttés, séchés dans une étuve ventilée, puis plongés dans une solution de résine furfurylique dans de l'alcool à 50 % en poids.
Après séchage à l'étuve, les grains sont traités à 700°C pendant 2 heures sous azote.
Le système catalytique présente une surface spécifique BET égale à 34 m2/g.

### Exemple 9

Système carbure de vanadium sur support nitrure de silicium. Imprégnation en un temps.

Des grains de nitrure de silicium NITROSIL 10 sont plongés dans une solution alcoolique diluée d'acide tétravanadique (H₂V₄O₁₁) et de résine furfurylique de viscosité ajustée jusqu'à imprégnation totale. Après égouttage, les grains sont séchés dans une étuve sous agitation.
Après séchage à l'étuve, les grains sont traités à 700°C pendant 2 heures sous azote, comme dans l'exemple 8. Le système catalytique présente une surface spécifique BET égale à 25 m2/g.

## Revendications

1. Procédé de préparation d'un système catalytique composé d'un support poreux et d'une couche de carbures métalliques dont la surface spécifique permet une activité catalytique caractérisé en ce qu'il comprend les phases suivantes:
- préparation d'une solution ou suspension a viscosité convenable, d'un oxyde ou d'un composé réductible d'un au moins des métaux appartenant au groupe: molybdène, tungstène, vanadium, tantale, niobium, chrome et fer dans un liquide organique contenant un constituant organique choisi parmi une résine organique, un produit polymérisable, un brai ou un goudron dilués dans un solvant;
- immersion du support poreux dans cette solution ou suspension de composés métalliques dans le liquide organique;
- étuvage pour éliminer le solvant contenu dans le liquide organique, polymériser le constituant organique et ne laisser sur le support que le résidu solide de la solution ou suspension;
- carbonisation de la partie organique du résidu solide de la solution ou suspension;
- réduction et carburation entre 700 et 1400°C en atmosphère non oxydante du composé métallique de la solution ou suspension.

2. Procédé de préparation d'un système catalytique composé d'un support poreux et d'une couche de carbures métalliques dont la surface spécifique permet une activité catalytique caractérisé en ce qu'il comprend les phases suivantes:
- imprégnation du support poreux par une solution aqueuse ou organique d'un sel réductible d'un au moins des métaux appartenant au groupe: molybdène tungstène, vanadium, tantale, niobium, chrome et fer;
- étuvage pour éliminer l'eau ou le solvant et ne laisser sur le support que le sel métallique;
- immersion du support poreux dans une solution à viscosité ajustée contenant un constituant organique choisi parmi une résine organique ou un produit polymérisable.
- étuvage pour éliminer le solvant contenu dans la solution organique, polymériser le constituant organique et ne laisser sur le support que le sel métallique et le constituant organique.
- carbonisation de la partie organique du résidu solide de la solution ou suspension;
- réduction et carburation entre 700 et 1400°C en atmosphère non oxydante du sel métallique de la solution.

3. Procédé de préparation d'un système catalytique composé d'un support poreux et d'une couche de carbures métalliques dont la surface spécifique permet une activité catalytique caractérisé en ce qu'il comprend les phases suivantes:
- immersion du support poreux dans une solution à viscosité ajustée d'un constituant organique choisi parmi une résine organique ou un produit polymérisable.
- étuvage pour éliminer le solvant polymériser le constituant organique et ne laissez sur le support que le constituant organique;
- carbonisation du constituant organique résiduel;
- imprégnation du support poreux revêtu d'une couche carbonée à surface spécifique élevée avec une solution aqueuse ou organique d'un sel réductible d'un au moins des métaux suivants: molybdène,tungstène vanadium,tantale,niobium,chrome et fer;
- étuvage pour éliminer l'eau ou le solvant;
- réduction et carburation entre 700 et 1400°C en atmosphère non oxydante du sel métallique de la solution.

4. Procédé de préparation d'un système catalytique selon l'une des revendications 1 à 3 caractérisé en ce que le support est constitué d'oxydes de silicium ou d'aluminium ou de silicate d'aluminium et de magnésium.

5. Procédé de préparation d'un système catalytique selon l'une des revendications 1 à 3 caractérisé en ce que le support est constitué de nitrure de silicium ou de composé à base de nitrure de silicium et d'alumine.

6. Procédé de préparation d'un système catalytique selon l'une des revendications 1 à 3 caractérisé en ce que le support est du carbure de silicium fabriqué par mise en forme, en particulier par extrusion d une pâte composée d'un mélange de poudre de silicium, et d'agents susceptibles d'apporter du carbone, polymérisation, carbonisation et enfin carburation du silicium contenu dans le support mis en forme.

7. Procédé de préparation d'un système catalytique selon la revendication 6 caractérisé en ce que les agents susceptibles d'apporter du carbone sont constitués d'un solide qui est de la poudre de carbon black et/ou de la poudre de charbon actif et d'un liquide organique polymérisable visqueux.

8. Procédé de préparation d'un système catalytique selon la revendication 7 caractérisé en ce que le liquide organique polymérisable visqueux est une résine furfurylique ou phénolique.

9. Procédé de préparation d'un système catalytique selon l'une des revendications 7 ou 8 caractérisé en ce que les proportions de poudre de silicium, de poudre de carbon black, de liquide organique polymérisable sont fixées de telle sorte que le rapport entre le poids de carbone provenant de la carbonisation du liquide organique et du carbon black et le poids de silicium corresponde à la composition stoechiométrique du carbure de silicium et de telle sorte que la pâte ait une plasticité convenable pour l'extrusion.

10. Procédé de préparation d'un système catalytique selon l'une des revendications 6 à 9 caractérisé en ce que la carbonisation du support mis en forme est faite en atmosphère non-oxydante, à une température comprise entre 600°C et 1000°C, pendant une durée suffisante pour carboniser la totalité de la résine.

11. Procédé de préparation d'un système catalytique selon l'une des revendications 6 à 10 caractérisé en ce que la carburation du silicium se fait en atmosphère non-oxydante à une température comprise entre 1350°C et 1450°C, pendant une durée de 1 à 2 heures.

12. Procédé de préparation d'un système catalytique selon la revendication 11 caractérisé en ce que la carburation du silicium se fait en atmosphère nitrurante.

13. Procédé de préparation d'un système catalytique selon l'une des revendications 1 à 12 caractérisé en ce que le constituant organique est une résine thermodurcissable de préférence une résine furfurylique ou phénolique.

14. Procédé de préparation d'un système catalytique selon l'une des revendications 1 à 13 caractérisé en ce que la carbonisation du constituant organique déposé sur le support se fait en atmosphère non-oxydante, à une température comprise entre 300°C et 1000°C, pendant une durée suffisante pour carboniser la totalité du constituant organique.

15. Procédé de préparation d'un système catalytique selon l'une des revendications 1 à 13 caractérisé en ce que la carbonisation du constituant organique, la réduction de l'oxyde et la carburation du métal se font en un seul traitement à une température comprise entre 900°C et 950°C.

16. Procédé de préparation d'un système catalytique à base de fer selon l'une des revendications 1 à 13 caractérisé en ce que la carbonisation du constituant organique, la réduction de l'oxyde de fer et la carburation partielle du fer se font en un seul traitement à une température d'environ 1200°C en atmosphère non oxydante.

17. Procédé de préparation d'un système catalytique à base de fer selon l'une des revendications 1 à 13 caractérisé en ce que la carbonisation du constituant organique, le réduction de l'oxyde de fer et la carburation quasi totale du fer se font en un seul traitement à une température voisine de 950°C en atmosphère réductrice et carburante.

18. Procédé de préparation d'un système catalytique selon l'une des revendications 1 à 17 caractérisé en ce que, pour favoriser la formation de phases amorphes d'oxycarbures, on procède, après les stades de réduction et de carburation, à une oxydation ménagée à une température comprise entre 300°C et 700°C suivant les carbures.

19. Système catalytique constitué d'un support poreux et d'un dépôt de catalyseur sur ce support, tel qu'obtenu par le procédé de l'une des revendications 1 à 18.

20. Système catalytique selon la revendication 19 caractérisé en ce que le support est en carbure de silicium et qu'il présente la forme d'une structure monolithique alvéolaire, en nid d'abeille, d'extrudés, de granulés ou de poudres,en vue d'améliorer le contact entre le catalyseur et les gaz.

21. Système catalytique selon l'une des revendications 19 ou 20 caractérisé par la présence simultanée dans le dépôt superficiel d'oxycarbures et de carbures des métaux revendiqués.

22. Système catalytique selon l'une des revendications 20 ou 21 caractérisé en ce que la surface spécifique du support poreux de carbure de silicium est comprise entre 0,5 et 4 m²/g.

23. Système catalytique selon la revendication 19 caractérisé en ce que le support est en nitrure de silicium ou en sialon, composé de nitrure de silicium et d'alumine.

## Claims

1. A method of preparing a catalytic system composed of a porous support and a coating of metallic carbides, the specific surface area of which permits catalytic activity, characterised in that it comprises the following phases:
- preparing a solution or suspension of suitable viscosity of a reducible oxide or compound of at least one of the metals belonging to the group: molybdenum, tungsten, vanadium, tantalum, niobium, chrome and iron, in an organic liquid containing an organic constituent selected from an organic resin, a polymerisable product, a pitch or a tar diluted in a solvent;
- immersing the porous support in this solution or suspension of metallic compounds in the organic liquid;
- stoving to eliminate the solvent contained in the organic liquid, to polymerise the organic constituent, and to leave only the solid residue of the solution or suspension on the support;
- carbonising the organic part of the solid residue of the solution or suspension;
- reduction and carburetion of the metallic compound of the solution or suspension at between 700 and 1400°C in a non-oxidising atmosphere.

2. A method of preparing a catalytic system composed of a porous support and a coating of metallic carbides, the specific surface area of which permits catalytic activity, characterised in that it comprises the following phases:
- impregnating the porous support with an aqueous or organic solution of a reducible salt of at least one of the metals belonging to the group: molybdenum, tungsten, vanadium, tantalum, niobium, chrome and iron;
- stoving to eliminate the water or the solvent and to leave only the metallic salt on the support;
- immersing the porous support in a solution of adjusted viscosity containing an organic constituent selected from an organic resin or a polymerisable product.
- stoving to eliminate the solvent contained in the organic solution, to polymerise the organic constituent, and to leave only the metallic salt and the organic constituent on the support.
- carbonising the organic part of the solid residue of the solution or suspension;
- reduction and carburetion at between 700 and 1400°C in non-oxidising atmosphere of the metallic salt of the solution.

3. A method of preparing a catalytic system composed of a porous support and a coating of metallic carbides, the specific surface area of which permits catalytic activity, characterised in that it comprises the following phases:
- immersing the porous support in a solution of adjusted viscosity of an organic constituent selected from an organic resin or a polymerisable product.
- stoving to eliminate the solvent, to polymerise the organic constituent, and to leave only the organic constituent on the support;
- carbonising the residual organic constituent;
- impregnating the porous support covered with a carbonated coating of high specific surface area with an aqueous or organic solution of a reducible salt of at least one of the following metals: molybdenum, tungsten, vanadium, tantalum, niobium, chrome and iron;
- stoving to eliminate the water or the solvent;
- reduction and carburetion at between 700 and 1400°C in a nonoxidising atmosphere of the metallic salt of the solution.

4. A method of preparing a catalytic system according to one of Claims 1 to 3, characterised in that the support is constituted by silicon or aluminium oxides or magnesium and aluminium silicate.

5. A method of preparing a catalytic system according to one of Claims 1 to 3, characterised in that the support is constituted by silicon nitride or a compound based on silicon nitride and alumina.

6. A method of preparing a catalytic system according to one of Claims 1 to 3, characterised in that the support is silicon carbide produced by shaping, particularly by extrusion, of a paste composed of a mixture of powdered silicon and agents capable of supplying carbon, polymerisation, carbonisation and finally carburetion of the silicon contained in the shaped support.

7. A method of preparing a catalytic system according to Claim 6, characterised in that the agents capable of supplying carbon are constituted by a solid which is powdered carbon black and/or powdered activated charcoal and a viscous polymerisable organic liquid.

8. A method of preparing a catalytic system according to Claim 7, characterised in that the viscous polymerisable organic liquid is a furfurylic or phenolic resin.

9. A method of preparing a catalytic system according to either Claim 7 or Claim 8, characterised in that the proportions of powdered silicon, powdered carbon black, polymerisable organic liquid are fixed so that the ratio between the weight of carbon emanating from the carbonisation of the organic liquid and of the carbon black and the weight of the silicon corresponds to the stoichiometric composition of the silicon carbide, and so that the paste is of a plasticity which is suitable for extrusion.

10. A method of preparing a catalytic system according to one of Claims 6 to 9, characterised in that the carbonisation of the shaped support takes place in a non-oxidising atmosphere, at a temperature of between 600°C and 1000°C, for a period of time which is sufficient to carbonise all the resin.

11. A method of preparing a catalytic system according to one of Claims 6 to 10, characterised in that the carburetion of the silicon takes place in a non-oxidising atmosphere, at a temperature of between 1350°C and 1450°C, for between 1 and 2 hours.

12. A method of preparing a catalytic system according to Claim 11, characterised in that the carburetion of the silicon takes place in a nitriding atmosphere.

13. A method of preparing a catalytic system according to one of Claims 1 to 12, characterised in that the organic constituent is a heat hardenable resin, preferably a furfurylic or phenolic resin.

14. A method of preparing a catalytic system according to one of Claims 1 to 13, characterised in that the carbonisation of the organic constituent deposited on the support takes place in a non-oxidising atmosphere, at a temperature of between 300°C and 1000°C, for a period of time sufficient to carbonise all the organic constituent.

15. A method of preparing a catalytic system according to one of Claims 1 to 13, characterised in that the carbonisation of the organic constituent, the reduction of the oxide and the carburetion of the metal take place in one single treatment at a temperature of between 900°C and 950°C.

16. A method of preparing an iron-based catalytic system according to one of Claims 1 to 13, characterised in that the carbonisation of the organic constituent, the reduction of the iron oxide and the partial carburetion of the iron take place in one single treatment at a temperature of about 1200°C in a non-oxidising atmosphere.

17. A method of preparing an iron-based catalytic system according to one of Claims 1 to 13, characterised in that the carbonisation of the organic constituent, the reduction of the iron oxide, and the quasi total carburetion of the iron take place in one single treatment at a temperature close to 950°C in a reducing and carburising atmosphere.

18. A method of preparing a catalytic system according to one of Claims 1 to 17, characterised in that in order to promote the formation of amorphous oxycarbide phases, controlled oxidation is carried out after the reducing and carburetion stages, at a temperature of between 300°C and 700°C depending on the carbides.

19. A catalytic system constituted by a porous support and a deposited coating of catalyst on that support, such as obtained by way of the process of one of Claims 1 to 18.

20. A catalytic system according to Claim 19, characterised in that the support is silicon carbide and that it takes the shape of a monolithic alveolate or honeycomb structure, extrudates, granules or powder, for the purpose of improving contact between the catalyst and the gases.

21. A catalytic system according to either Claim 19 or Claim 20, characterised by the simultaneous presence in the surface deposit of oxycarbides and carbides of the metals claimed.

22. A catalytic system according to either Claim 20 or Claim 21, characterised in that the specific surface area of the silicon carbide porous support is between 0.5 and 4 m²/g.

23. A catalytic system according to Claim 19, characterised in that the support is silicon nitride or sialon, a compound of alumina and silicon nitride.

## Patentansprüche

1. Verfahren zur Herstellung einer Katalysatorvorrichtung mit einem porösen Träger und einer Metallkarbidschicht, deren Oberflächenkennzahl eine katalytische Tätigkeit zuläßt, gekennzeichnet durch folgende Schritte:
- Herstellung einer Lösung oder Suspension mit geeigneter Viskosität, eines Oxids oder einer Verbindung, welcher mindestens eines der Metalle der Molybdän-, Wolfram-, Vanadium-, Tantal-, Niob-, Chrom- und Eisengruppe entzogen werden kann, in einer organischen Flüssigkeit mit einem organischen Bestandteil, welcher ein organisches Harz, ein polymerisationsfähiges Produkt oder ein Pech oder ein Teer sein kann, die in einem Lösungmittel verdünnt werden;
- Eintauchen des porösen Trägers in diese Lösung oder Suspension aus Metallverbindungen in der organischen Flüssigkeit;
- Trocknung im Ofen, um das in der organischen Flüssigkeit enthaltene Lösungsmittel zu entfernen, den organischen Bestandteil zu polymerisieren und auf dem Träger nur den festen Rückstand der Lösung oder Suspension zu belassen ;
- Verkohlung des organischen Teils des festen Rückstands der Lösung oder Suspension;
- Reduktion und Vergasung der Metallverbindung der Lösung oder Suspension zwischen 700°C und 1400°C in nicht oxidierender Atmosphäre.

2. Verfahren zur Herstellung einer Katalysatorvorrichtung mit einem porösen Träger und einer Metallkarbidschicht, deren Oberflächenkennzahl eine katalytische Tätigkeit zuläßt, gekennzeichnet durch folgende Schritte:
- Imprägnierung des porösen Trägers mit einer wässrigen oder organischen Flüssigkeit eines Salzes, dem mindestens eines der Metalle der Molybdän-, Wolfram-, Vanadium-, Tantal-, Niob-, Chrom- und Eisengruppe entzogen werden kann;
- Trocknung im Ofen, um Wasser oder Lösungsmittel zu entfernen und auf dem Träger nur das Metallsalz zu belassen;
- Eintauchen des porösen Trägers in eine Lösung mit geeigneter Viskosität, die einen organischen Bestandteil enthält, welcher ein organisches Harz oder ein polymerisationsfähiges Produkt sein kann;
- Trocknung im Ofen, um das in der organischen Lösung enthaltene Lösungsmittel zu entfernen, den organischen Bestandteil zu polymerisieren und auf dem Träger nur das Metallsalz und den organischen Bestandteil zu belassen;
- Verkohlung des Organischen Teils des festen Rückstands der Lösung oder Suspension;
- Reduktion und Vergasung des Metallsalzes der Lösung zwischen 700°C und 1400°C in nicht oxidierender Atmosphäre.

3. Verfahren zur Herstellung einer Katalysatorvorrichtung mit einem porösen Träger und einer Metallkarbidschicht, deren Oberflächenkennzahl eine katalytische Tätigkeit zuläßt, gekennzeichnet durch folgende Schritte:
- Eintauchen des porösen Trägers in eine Lösung mit geeigneter Viskosität eines organischen Bestandteils, welcher ein organisches Harz oder ein polymerisationsfähiges Produkt sein kann;
- Trocknung im Ofen, um das Lösungsmittel zu entfernen, den organischen Bestandteil zu polymerisieren und auf dem Träger nur den organischen Bestandteil zu belassen;
- Verkohlung des organischen Restbestandteils;
- Imprägnierung des porösen, mit einer kohlenstoffhaltigen Schicht mit hoher Oberflächenkennzahl überzogenen Trägers mit einer wässrigen oder organischen Lösung eines Salzes, dem mindestens eines der Metalle der Molybdän-, Wolfram-, Vanadium-, Tantal-, Niob-, Chrom- und Eisengruppe entzogen werden kann;
- Trocknung im Ofen, um Wasser oder Lösungsmittel zu entfernen;
- Reduktion und Vergasung des Metallsalzes der Lösung zwischen 700°C und 1400°C in nicht oxidierender Atmosphäre.

4. Verfahren zur Herstellung einer Katalysatorvorrichtung nach einem der Ansprüche 1 bis 3, dadurch gekennzeichnet, daß der Träger aus Silizium- oder Aluminiumoxiden oder aus Aluminium- und Magnesiumsilikat besteht.

5. Verfahren zur Herstellung einer Katalysatorvorrichtung nach einem der Ansprüche 1 bis 3, dadurch gekennzeichnet, daß der Träger aus Siliziumnitrid oder aus einer Verbindung aus Siliziumnitrid und Aluminiumoxid besteht.

6. Verfahren zur Herstellung einer Katalysatorvorrichtung nach einem der Ansprüche 1 bis 3, dadurch gekennzeichnet, daß der Träger aus Siliziumkarbid besteht, das durch Bearbeitung, insbesondere durch Pressen einer Paste aus einem Gemisch von Siliziumpulver und Wirkstoffen, welche geeignet sind, Kohlenstoff zuzuführen, durch Polymerisation, Verkohlung und schließlich Vergasung des in dem bearbeiteten Träger enthaltenen Siliziums erhalten wird.

7. Verfahren zur Herstellung einer Katalysatorvorrichtung nach Anspruch 6, dadurch gekennzeichnet, daß die Wirkstoffe, welche geeignet sind, Kohlenstoff zuzuführen, aus einem Feststoff bestehen, bei dem es sich um schwarzes Kohlepulver und/oder aktives Kohlepulver handelt, sowie aus einer zähflüssigen, polymerisationsfähigen organischen Flüssigkeit.

8. Verfahren zur Herstellung einer Katalysatorvorrichtung nach Anspruch 7, dadurch gekennzeichnet, daß die zähflüssige, polymerisationsfähige organische Flüssigkeit ein Furfurol- oder Phenolharz ist.

9. Verfahren zur Herstellung einer Katalysatorvorrichtung nach einem der Ansprüche 7 oder 8, dadurch gekennzeichnet, daß die Mengen von Siliziumpulver, schwarzem Kohlepulver und polymerisationsfähiger organischer Flüssigkeit so festgelegt werden, daß das Verhältnis zwischen Kohlenstoffgewicht, welches aus der Verkohlung der organischen Flüssigkeit und dem schwarzen Kohlepulver entsteht, und Siliziumgewicht der stöchiometrischen Zusammensetzung des Siliziumkarbids entspricht und daß die Paste eine zum Pressen geeignete Plastizität aufweist.

10. Verfahren zur Herstellung einer Katalysatorvorrichtung nach einem der Ansprüche 6 bis 9, dadurch gekennzeichnet, daß die Verkohlung des bearbeiteten Trägers in nicht oxidierender Atmosphäre durchgeführt wird, bei einer Temperatur von 600°C bis 1000°C, während einer ausreichend langen Dauer, um den gesamten Harz zu verkohlen.

11. Verfahren zur Herstellung einer Katalysatorvorrichtung nach einem der Ansprüche 6 bis 10, dadurch gekennzeichnet, daß die Vergasung des Siliziums in nicht oxidierender Atmosphäre durchgeführt wird, bei einer Temperatur von 1350°C bis 1450°C, während einer Dauer von 1 bis 2 Stunden.

12. Verfahren zur Herstellung einer Katalysatorvorrichtung nach Anspruch 11, dadurch gekennzeichnet, daß die Vergasung des Siliziums in nitrierender Atmosphäre durchgeführt wird.

13. Verfahren zur Herstellung einer Katalysatorvorrichtung nach einem der Ansprüche 1 bis 12, dadurch gekennzeichnet, daß der organische Bestandteil ein wärmehärtendes Harz, vorzugweise ein Furfurol- oder Phenolharz ist.

14. Verfahren zur Herstellung einer Katalysatorvorrichtung nach einem der Ansprüche 1 bis 13, dadurch gekennzeichnet, daR die Verkohlung des auf dem Träger aufgewachsenen organischen Bestandteils in nicht oxidierender Atmospäre durchgeführt wird, bei einer Temperatur von 300°C bis 1000°C, während einer ausreichend langen Dauer, um den gesamten organischen Bestandteil zu verkohlen.

15. Verfahren zur Herstellung einer Katalysatorvorrichtung nach einem der Ansprüche 1 bis 13, dadurch gekennzeichnet, daß die Verkohlung des organischen Bestandteils, die Reduktion des Oxids und die Vergasung des Metalls im Verlauf einer einzigen Behandlung durchgeführt werden, bei einer Temperatur von 900°C und 950°C.

16. Verfahren zur Herstellung einer Katalysatorvorrichtung auf Eisenbasis nach einem der Ansprüche 1 bis 13, dadurch gekennzeichnet, daß die Verkohlung des organischen Bestandteils, die Reduktion des Eisenoxids und die teilweise Vergasung des Eisens im Verlauf einer einzigen Behandlung durchgeführt werden, bei einer Temperatur von ca. 1200°C in nicht oxidierender Atmosphäre.

17. Verfahren zur Herstellung einer Katalysatorvorrichtung auf Eisenbasis nach einem der Ansprüche 1 bis 13, dadurch gekennzeichnet, daß die Verkohlung des organischen Bestandteils, die Reduktion des Eisenoxids und die fast vollständige Vergasung des Eisens im Verlauf einer einzigen Behandlung durchgeführt werden, bei einer Temperatur um 950°C in Reduktions- und Vergasungsatmosphäre.

18. Verfahren zur Herstellung einer Katalysatorvorrichtung nach einem der Ansprüche 1 bis 17, dadurch gekennzeichnet, daß zur Bildung amorpher Oxykarbidphasen nach den Reduktions- und Vergasungsschritten eine gelenkte Oxidation durchgeführt wird, bei einer Temperatur von 300°C und 700°C je nach den Karbiden.

19. Katalysatorvorrichtung, bestehend aus einem porösen Träger und einer Katalysatorschicht auf diesem Träger, so wie sie durch das Verfahren nach einem der Ansprüche 1 bis 18 hergestellt wird.

20. Katalysatorvorrichtung nach Anspruch 19, dadurch gekennzeichnet, daß der Träger aus Siliziumkarbid ist und daß er die Form einer zeigen, wabenförmigen Festkörperstruktur aus Extrudaten, Granulaten oder Pulvern aufweist, um einen besseren Kontakt zwischen dem Katalysator und den Gasen zu gewährleisten.

21. Katalysatorvorrichtung nach einem der Ansprüche 19 oder 20, dadurch gekennzeichnet, daß in der Oberflächenschicht Oxykarbide und Karbide der beanspruchten Metalle nebeneinander vorkommen.

22. Katalysatorvorrichtung nach einem der Ansprüche 20 oder 21, dadurch gekennzeichnet, daß die Oberflächenkennzahl des porösen Trägers aus Siliziumkarbid zwischen 0,5 und 4 m²/g liegt.

23. Katalysatorvorrichtung nach Anspruch 19, dadurch gekennzeichnet, daß der Träger aus Siliziumnitrid ist oder aus Sialon, bestehend aus Siliziumnitrid und Alumiumoxid.
